# EUROPEAN PATENT APPLICATION

(11) **EP 1 231 423 A1**
(43) Date of publication of application: **14.08.2002**
(21) Application number: 01830094.7
(22) Date of filing: 13.02.2001
(51) Int. Cl.: F16L 9/18, B29C 53/58

(54) **Reinforced multi-walled pipe and method for its manufacture**

(71) Applicant: Eurotecnica Development & Licensing S.p.A., 20124 Milano (IT); Codignola, Franco, 20139 Milano (IT)
(72) Inventor: Codignola, Franco, 20139 Milano (IT)
(74) Representative: Dragotti, Gianfranco

(57) **Abstract**

A reinforced tubular manufactured article consists of two concentric tubular layers or cylinders (10,12) respectively inner and outer, preferably made of glass fibre reinforced polyester resin, there being housed in the gap between said two cylinders a reinforcing element (14) consisting of a tubular element, preferably a knurled tube, wound in a helical spiral of predetermined pitch about said inner cylinder.

The winding of said knurled tube (14) on the inner cylinder (10) is carried out when the cylinder is only just formed and the polyester resin which constitutes it is still in the paste-like state, so that the resin penetrates into the surface hollows or knurling of said reinforcing tube (14).

## Description

The present invention relates to a method for the manufacture of reinforced tubular manufactured articles and the resulting tubular manufactured article.

More specifically, the present invention relates to reinforced tubular manufactured articles of the type consisting of an outer layer and an inner layer, both made of reinforced thermosetting resin, said layers being connected to one another by a reinforcing element, following a helical course and fixed to the layers themselves.

This type of tubular manufactured article lends itself particularly to production in even very large diameters and with sufficiently high rigidity values, so that it can find application in systems for conveying and transporting fluids and liquids (aqueducts, gas pipelines, sewer installations, and generally for the medium and long distance transportation of such materials) in place of conventional tubular manufactured articles of asbestos cement, precompressed or centrifuged reinforced concrete and, more generally, metallic materials such as steel.

The advantages of the tubular manufactured articles of the type to which the present invention refers are numerous and are self-evident. In fact, on the one hand it is possible to use materials that are chemically and electrically inert, as well as corrosion-resistant, and on the other hand it is possible to produce manufactured articles having a much lower specific weight compared with the conventional materials mentioned above, in addition to high rigidity.

The methods for the manufacture of the articles in question were the subject of three Italian patents, respectively Nos. 1,006,957, 1,037,746 and 1,058,524, wherein, between two coaxial cylindrical layers, the reinforcing element consists of a ribbing produced from the same material that constitutes the inner and outer layers, in particular from glass fibre reinforced unsaturated polyester resin.

The first two Italian patents cited above describe and claim a tubular manufactured article comprising an outer layer and an inner layer, both tubular and coaxial, of a reinforced thermosetting resin, for example and preferably glass fibre reinforced polyester resin, having interposed between the two layers an expanded resin layer in which is embedded a ribbing following a helical course, this also being produced from reinforced thermosetting resin, preferably of the same nature as the inner and outer layers.

For simplicity of explanation, in the continuation of this description the aforesaid inner and outer tubular layers will also be referred to as inner cylinder and outer cylinder.

The application of the ribbing takes place after there has been produced in the expanded resin layer (for example by milling) cylindrical helical grooving, forming a seat for the ribbing, having a pitch and cross-section equal, respectively, to the pitch and cross-section predetermined for the ribbing. After the grooving has been filled with a glass fibre reinforced resin, and the resin has hardened, preferably operations of rectifying and smoothing the outer cylindrical wall of the partially formed tube are performed, after which the formation of the outer resistant cylindrical layer on the aforesaid rectified cylindrical wall is carried out.

For the outer cylinder, the same reinforced resin already employed for the production of the inner cylinder and the ribbing is generally used, such as, for example, the glass fibre reinforced unsaturated polyester resin already mentioned.

In the two Italian patents in question, the presence of the mass of expanded resin was considered to be essential both for producing the grooving for housing the ribbing, and for providing the outer cylindrical wall on which to form the outer resistant wall.

This second requirement was also linked to the technique for producing the aforesaid outer cylinder, consisting in spraying the preselected resin with the addition of short glass fibres.

In more recent times, other techniques for the formation of tubular layers of reinforced resin have been perfected, such as that termed "filament winding", which consists in winding on a mandrel continuous glass filaments impregnated with resin. A rotary motion is preferably imparted to the mandrel, while the head for depositing the glass filament impregnated with polyester resin executes an alternating translational motion directed axially with respect to the mandrel. With this technique, manufactured articles are obtained that have significantly improved strength characteristics compared to those obtained with the previous spraying or casting techniques.

However, even by applying this new technology it was considered necessary to have available a continuous cylindrical support wall for the forming of the outer cylinder.

There still remained unchanged, therefore, problems and drawbacks of both a technical and an economic nature, linked to the presence of the expanded resin. In fact, the latter, generally consisting of expanded polyurethane, does not contribute to the mechanical strength of the finished tube and behaves like any inert material whatever for filling the spaces between the turns of the helical ribbing, so that the final tubular manufactured article is made heavier to no effect.

Secondly, the production of the seat grooving for the ribbing also constitutes a laborious and industrially uneconomic operation, in so far as the execution of the milling must follow accurate polishing of the grooving before the application of the ribbing. Moreover, the part of the expanded resin which is removed as waste during the milling step is clearly lost.

Finally, from the point of view of mechanical strength, the application of the ribbing is carried out when the inner cylinder (on which the layer of expanded resin has already been applied) is completely hardened, so that the bond between ribbing and inner cylinder is neither more nor less than gluing, having a low resistance in view of the reduced extension of the surfaces in contact.

There is a similar drawback with the outer cylinder, which is produced when the ribbing is already hardened.

Another problem linked to production according to the prior art is that of the behaviour of the tubular manufactured article when it is subjected to pressures acting on the inside or the outside of the latter.

The use of unsaturated polyester resins for the production of the ribbing causes the ribbing to reach a high modulus of elasticity. By applying high pressures to the inside or outside of the tubular manufactured article it has been found that the latter rapidly starts to yield and fracture, and that the yield points are located in the immediate vicinity of the attachment of the ribbing respectively to the inner cylinder and to the outer cylinder. As an explanation for this behaviour it was found that ribbing with an excessively high modulus of elasticity tends to absorb high tensions with low deformations, so that high stresses develop in the base and outer layers or cylinders. In other words, the ribbing transmits very high shear stresses to the outer cylinder when the stresses are applied to the outside of the manufactured article or, respectively, to the base or inner cylinder when the manufactured article is subjected to internal pressure.

To obviate the aforesaid yielding and consequent fractures, if it is desired to maintain the high rigidity of the manufactured article (that is to say, a high modulus of elasticity of the reinforcing ribbing), it is necessary to increase the thicknesses and to intervene in the physical and mechanical characteristics of the inner and outer cylinders: such interventions, however, produce an increase in the weight of the manufactured article and in its production cost, so that it is no longer competitive with the tubular manufactured articles produced with the conventional materials.

However, in the case of ribbing having an excessively low modulus of elasticity there is practically a lack of distribution to the entire manufactured article of the loads acting on the inner and/or outer layers or cylinders, both because of the excessive elasticity of the ribbing and because the latter cannot prevent the mutual relative slippage of the layers, which slippage rapidly leads to shearing of the ribbing, so that in reality the manufactured article behaves substantially like a single-layer manufactured article.

There remains, therefore, the problem of producing a tubular manufactured article of plastics material of the aforesaid type which, while having sufficient rigidity for its use in the applications mentioned previously (aqueducts, large sewers and long distance transport of fluids), at the same time has a lower specific weight than that of manufactured articles produced for these purposes with conventional materials, and a lower cost of production, transport and installation.

This problem is substantially solved by the present invention, which consists of a tubular manufactured article constituted by two concentric tubular layers or cylinders, respectively outer and inner, forming between them a gap in which is arranged a reinforcing element fixed to the adjacent surfaces, facing one another, of said outer and inner cylinders, characterized in that said reinforcing element consists of a tubular element wound in spirals round said inner cylinder, said tubular element being also produced from plastics material.

In the preferred embodiment of the manufactured article according to the present invention, said tubular element consists of a knurled tube of a type which is known per se, produced from plastic polymers such as PVC, polyethylene, polypropylene, polyamides, polyesters and any other suitable plastic material, said knurled tube being in its turn optionally reinforced in a manner which is known per se.

Depending on the destination of the final manufactured article and therefore on the desired mechanical characteristics, the spirals of the knurled reinforcing tube, preferably wound helically on the outer surface of the inner tubular layer, are more or less close to one another, being able, at the limit, to be joined to one another without the solution of continuity.

In relation to the mechanical and strength characteristics required of the final manufactured article, the latter may also consist of a plurality of concentric tubular layers or cylinders, forming a corresponding plurality of gaps, in each of which gaps there is housed a spiral winding of a tubular reinforcing element consisting of the aforesaid knurled tube.

A further subject of the present invention is the method for the manufacture of the aforesaid tubular manufactured article, which method is characterized by the steps of:
(a) forming, in a manner which is known per se, a first resistant tubular layer or inner cylinder on a temporary support mandrel;
(b) winding on the outer surface of said inner cylinder, preferably before the latter hardens completely, a tubular element, preferably in the form of a knurled tube, in a helix of predetermined pitch and in an arrangement substantially perpendicular to the outer surface of said inner cylinder, said winding being carried out preferably by setting said temporary support mandrel in rotation about its axis;
(c) forming a second resistant tubular layer or outer cylinder on the spirals of said tubular reinforcing element, and
(d) after complete hardening of said outer cylinder, slipping said temporary support mandrel out of the axial bore of said inner cylinder.

In the preferred embodiment of the method according to the present invention, said inner and outer tubular layers or cylinders are produced by the already mentioned technique of "filament winding", in which case said temporary support mandrel is maintained in rotation about its axis for the entire duration of the manufacture of the manufactured article, or both during the steps (a) and (c) of production of the inner and outer tubular layers and during the step (b) of spiral winding of the tubular element or knurled reinforcing tube on the outer surface of said inner cylinder.

According to a further alternative embodiment of the method according to the present invention, said inner cylinder can be produced in two stages, the first consisting in winding on the temporary support mandrel, maintained in rotation, a glass fibre mat impregnated with a high content of unsaturated polyester resin, such that the inner tubular surface of the manufactured article has a high resistance to chemical and/or physical attacks, while the second stage is carried out by winding glass filaments impregnated with resin so as to produce the mechanically stronger part of said inner tubular layer or cylinder.

One of the principal advantages of the present invention lies in the fact that said tubular reinforcing element or knurled tube is wound onto the inner cylinder when the unsaturated polyester resin of the latter is still in the paste-like stage and not completely hardened, so that it can penetrate into the hollows of the knurling of the tube. The subsequent completion of the hardening of the polyester resin provides a mechanically much stronger bond between the inner cylinder and the reinforcing element.

The same occurs when the outer layer or cylinder is produced by winding on the outer surface the reinforcing winding of knurled tube already applied to the inner cylinder.

In this way, the final tubular manufactured article becomes a composite block with high rigidity, the weight of which is greatly reduced with respect to the composite tubular manufactured articles made of conventional materials, not only by the fact that the reinforcing element is hollow in itself, but also because it can be and is produced from polymers (such as those listed previously) having a specific weight markedly lower than that of the glass fibre filled polyester resin previously used for the reinforcing ribbing.

In addition to this, a further advantage lies in the lower cost of the knurled reinforcing tube compared with an equivalent ribbing produced from glass fibre filled resin.

Finally, it should not be forgotten that the diameter of the knurled tube may be selected according to the desired reinforcement characteristics of the final manufactured article, without the need to apply substantial modifications in the production process, since the outer cylinder is produced on the knurled tube winding already deposited and therefore by adapting itself to its outer proportions.

A further but no less important advantage of the present invention lies in the fact that it is possible to produce tubular manufactured articles with several layers, and that the knurled reinforcing tube can be used as a passage for the flow of fluids for thermal conditioning of the manufactured article, for example when the fluid or liquid to be transported in the innermost axial pipe of the tubular layer has to be maintained at a temperature above a predetermined threshold value.

The invention will now be described with reference to the appended drawings, which show, by way of non-limiting example, some preferred embodiments. In the drawings:
- Figure 1: is a perspective view of a segment of a tubular manufactured article according to the invention;
- Figure 2: is a partial section, in an axial plane, of the manufactured article in Figure 1;
- Figure 3: is a section according to the plane III-III in Figure 2;
- Figure 4: is a section analogous to Figure 2 of an alternative embodiment;
- Figure 5: is a section according to the plane V-V in Figure 4;
- Figures 6 and 7: are views analogous to Figure 2 of further alternative embodiments of the invention.

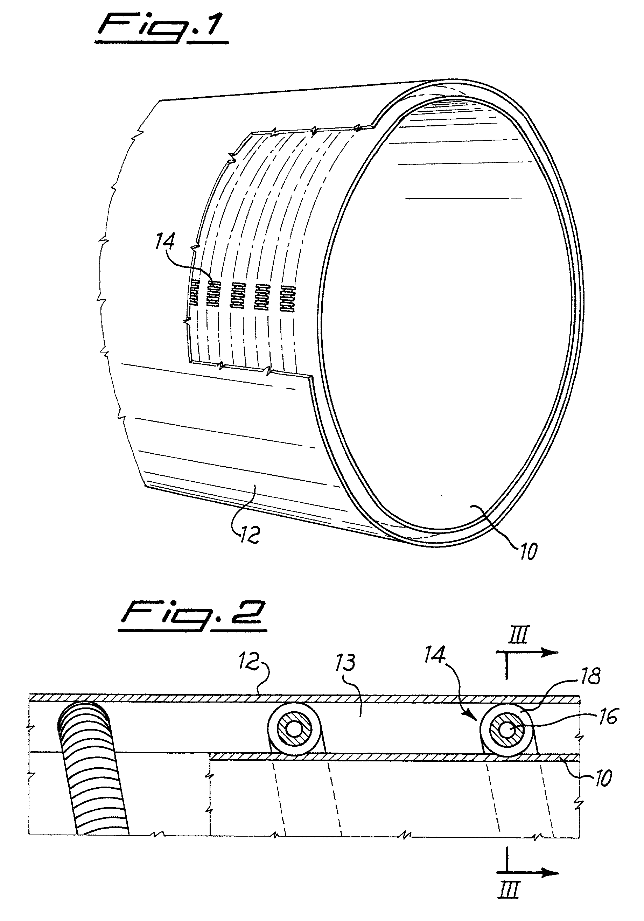

Referring first of all to Figures 1-3, these show a composite manufactured article comprising an inner tubular layer or cylinder 10 and an outer tubular layer or cylinder 12, coaxial to each other.

These two layers are preferably produced by the "filament winding" technique from glass fibre reinforced unsaturated polyester resin. As already mentioned, especially with regard to the inner cylinder 10, this may be produced in two substrates, differentiated as to reinforcing filler and/or mutual proportions between glass fibre (in the form of mat or felt) and impregnating resin.

Between the two cylinders 10 and 12 a gap 13 is provided in which, by the method already mentioned, there is interposed a reinforcing element consisting of helically wound spirals of a tubular element or tube 14, preferably in the shape of a knurled tube or having a wall with a fretted shape.

This type of tube is well known per se, since it is used for the laying and protection of electrical and telephonic equipment, for conveying air and water, and so on.

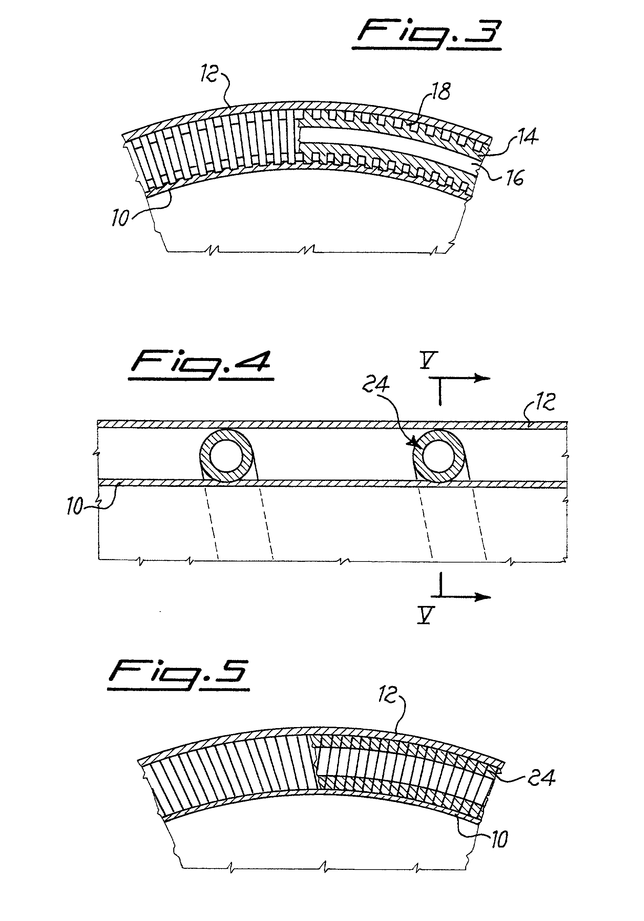

From Figure 3 it will be seen more clearly how the knurled reinforcing tube 14 comprises an axial passage 16 and a wall 18 having a fretted section into the low parts of which, during the winding of the tube 14 on the outer surface of the inner cylinder 10, the resin, still in the paste-like state, constituting said inner cylinder 10, penetrates, so that the anchorage between the knurled tube 14 and inner cylinder 10 has a very high strength.

The same type of anchorage is obtained between the knurled tube 14 and the outer cylinder 12, when the latter is produced on the outer surface of the partial manufactured article constituted by the inner cylinder and the knurled tube wound in spirals on the latter.

The formation of the outer cylinder 12 may be carried out when the hardening of the unsaturated polyester resin forming the inner cylinder 10 is completed, (so that the knurled tube winding 14 is already firmly anchored thereto), or when said hardening has still to be completed, so that the final step consists in the concomitant hardening of the resin forming both the inner cylinder 10 and the outer cylinder 12, such that the anchorage of the knurled tube winding 14 in the gap 13 occurs at the same time on both sides and with greater uniformity of mechanical strength.

As already mentioned, for the production of the tubular manufactured article in Figure 1, the inner cylinder 10 is firstly formed on a temporary support mandrel (not shown), which is preferably driven in a rotational motion about its axis at a predetermined velocity.

When the inner cylinder 10 has been completed and before the unsaturated polyester resin of which it is composed has hardened, there is carried out the step of winding of the knurled tube 14, which, owing to the rotational motion with which the temporary support mandrel, and therefore also the cylinder 10 just formed, is driven, is wound in a helix on its outer surface with a pitch which is predetermined. If the knurled tube 14 in the winding step is subjected to a certain tension, it will be pressed against the outer surface of the inner cylinder 10, penetrating into the surface itself for a thickness, albeit minimal, and therefore improving its anchorage to the surface of the inner cylinder.

Analogously, when the outer cylinder is produced by means of the "filament winding" method, in this case also the glass filament impregnated with resin, as it is being deposited, is pressed against the outer surface of the knurled tube spirals, bringing about the penetration of the still fluid polyester resin into the hollow surface portions of the knurled tube and therefore, with subsequent hardening of the resin, stronger anchoring of the outer cylinder to the knurled reinforcing tube.

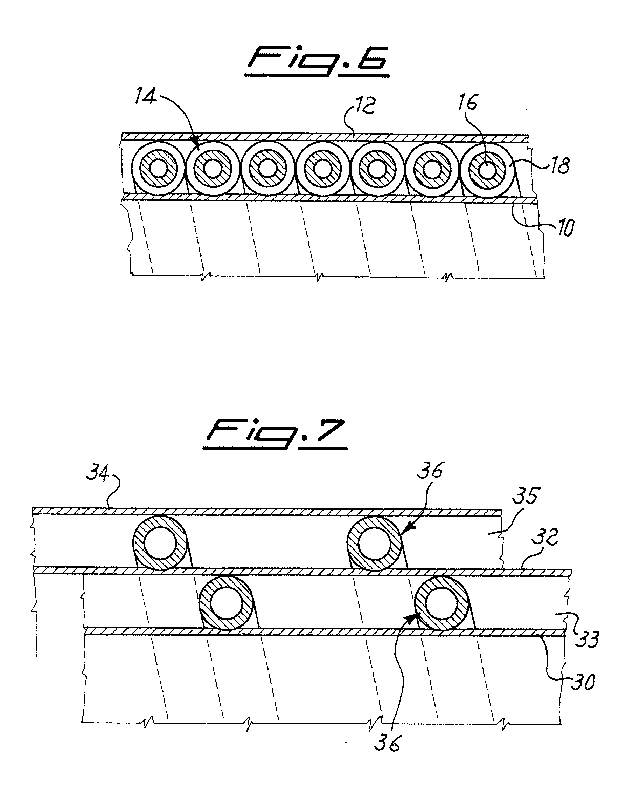

Turning now to Figures 4 and 5, these show an alternative embodiment in which the reinforcing tube 24, interposed between the respective inner 10 and outer 12 tubular layers, does not have a wall with fretted section but a continuous wall, so that the reinforcing effect obtained is more substantial, without however being at the expense of the anchorage of the tube 24 to the two, outer and inner, cylinders.

Figure 6 shows an alternative embodiment similar to that in Figures 2 and 3, except that the spirals of the knurled reinforcing tube 14 are much closer to one another, so that the reinforcing effect is greatly increased.

Finally, in the alternative embodiment shown in Figure 7, this shows a tubular manufactured article comprising, between coaxial tubular layers or cylinders 30, 32 and 34, produced in the manner already described and forming two gaps 33 and 35 in which there is housed, in an arrangement of helical spirals, a knurled reinforcing tube 34, also applied in the manner already stated.

It is obvious that the number of coaxial tubular layers may be increased in relation to the particular requirements of installation and/or operation of the final manufactured article.

The invention has been described in relation to preferred embodiments, it being understood that conceptually and mechanically equivalent modifications and variants are possible and may be provided without departing from its scope.

In particular, the reference to the technology of "filament winding", which remains the preferred technology for the implementation of the invention, should not be understood in a limiting sense, in so far as any technology may be used which makes it possible to form the inner and outer tubular layers so that the resin of which they are composed remains in the fluid or paste-like state at least for the time necessary for the application of the winding in helical spirals of the knurled reinforcing tube, or for the production of the tubular layer above and in contact with said winding.

## Claims

1. A tubular manufactured article consisting of two concentric tubular layers or cylinders, respectively outer and inner, of plastic material, forming between them a gap in which is arranged a reinforcing element fixed to the adjacent surfaces, facing one another, of said outer and inner cylinders, **characterized in that** said reinforcing element consists of a tubular element wound in spirals about said inner cylinder.

2. A tubular manufactured article according to claim 1, **characterized in that** said inner and outer cylinders are produced from glass fibre reinforced unsaturated polyester resin and said reinforcing element consists of a knurled tube produced from plastic material.

3. A tubular manufactured article according to claim 2, **characterized in that** said knurled tube is produced from plastic material selected from among polyvinyl chloride, polyethylene, polypropylene, poliamides, polyesters and the like.

4. A tubular manufactured article according to claim 1, **characterized in that** said reinforcing element is wound in helical spirals having a predetermined pitch.

5. A tubular manufactured article according to any one of the preceding claims, **characterized in that** it consists of a plurality of concentric tubular layers or cylinders, forming a corresponding plurality of gaps, there being housed in each gap a spiral winding of a tubular reinforcing element constituted by said knurled tube.

6. A tubular manufactured article according to the preceding claims, **characterized in that** said tubular reinforcing element is caused to penetrate, during the winding step, to a very slight depth into the outer surface of said inner cylinder.

7. A method for the manufacture of a tubular manufactured article according to any one of the preceding claims 1 to 6, **characterized by** the steps of:
(a) forming, in a manner which is known per se, a first resistant tubular layer or inner cylinder on a temporary support mandrel;
(b) winding on the outer surface of said inner cylinder, preferably before the latter hardens completely, a tubular element, preferably in the form of a knurled tube, in a helix of predetermined pitch and in an arrangement substantially perpendicular to the outer surface of said inner cylinder, said winding being carried out preferably by setting said temporary support mandrel in rotation about its axis;
(c) forming a second resistant tubular layer or outer cylinder on the spirals of said tubular reinforcing element and
(d) after complete hardening of said outer cylinder, slipping said temporary support mandrel out of the axial bore of said inner cylinder.

8. A method for the manufacture of a tubular manufactured article according to claim 7, **characterized in that** said inner and outer tubular layers or cylinders are produced by the "filament winding" technique, in which case said temporary support mandrel is maintained in rotation about its axis for the entire duration of the manufacture of the manufactured article.

9. A method for the manufacture of a tubular manufactured article according to claim 7, **characterized in that** said inner cylinder is produced in two stages, the first consisting in winding on the temporary support mandrel, maintained in rotation, a glass fibre mat impregnated with a high content of unsaturated polyester resin, such that the inner tubular surface of the manufactured article has a high resistance to chemical and/or physical attacks, while the second stage is carried out by winding glass filaments impregnated with resin so as to produce the mechanically stronger part of said inner tubular layer or cylinder.

10. A method for the manufacture of a tubular manufactured article according to claim 7, **characterized in that** said tubular reinforcing element or knurled tube is wound onto the inner cylinder when the unsaturated polyester resin of the latter is still in the paste-like state and not completely hardened, so that it can penetrate into the hollows of the knurling of the tube, the hardening of the polyester resin being completed subsequently to the winding step so as to produce a mechanically much stronger bond between the inner cylinder and the reinforcing element.

11. A method for the manufacture of a tubular manufactured article according to claim 10, **characterized in that** said outer cylinder is produced before the hardening of said resin forming said inner cylinder, such that the hardening of the polyester resin of both said inner cylinder and said outer cylinder occurs at the same time.

12. A method for the manufacture of a tubular manufactured article according to claim 7, **characterized in that** said tubular reinforcing element is wound in a helix onto said inner cylinder under a predetermined tension so that the spirals penetrate to a desired thickness into the outer surface of said inner cylinder.
